(19) Europäisches Patentamt / European Patent Office / Office européen des brevets

(11) **EP 3 599 718 B1**

(12) **FASCICULE DE BREVET EUROPEEN**

(45) Date de publication et mention de la délivrance du brevet:
**07.07.2021 Bulletin 2021/27**

(51) Int Cl.:
***H02S 50/15*** *(2014.01)*

(21) Numéro de dépôt: **19188119.2**

(22) Date de dépôt: **24.07.2019**

(54) **CARACTÉRISATION OPTIQUE DES PROPRIÉTÉS DE TRANSPORT ÉLECTRONIQUE D'UN MODULE PHOTOVOLTAÏQUE BIFACIAL**

OPTISCHE CHARAKTERISIERUNG DER ELEKTRONISCHEN TRANSPORTEIGENSCHAFTEN EINES ZWEI-SEITIGEN SOLARMODULS

OPTICAL CHARACTERISATION OF THE ELECTRONIC TRANSPORT PROPERTIES OF A BIFACIAL PHOTOVOLTAIC MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2018 FR 1857049**

(43) Date de publication de la demande:
**29.01.2020 Bulletin 2020/05**

(73) Titulaire: **Electricité de France
75008 Paris (FR)**

(72) Inventeur: **EL HAJJE, GILBERT
75017 PARIS (FR)**

(74) Mandataire: **Plasseraud IP
66, rue de la Chaussée d'Antin
75440 Paris Cedex 09 (FR)**

(56) Documents cités:
- **HO JIAN WEI ET AL: "Evaluating Performance Loss and Predicting Efficiency Gain of Bifacial Silicon Solar Cells", 2018 IEEE 7TH WORLD CONFERENCE ON PHOTOVOLTAIC ENERGY CONVERSION (WCPEC) (A JOINT CONFERENCE OF 45TH IEEE PVSC, 28TH PVSEC & 34TH EU PVSEC), IEEE, 10 juin 2018 (2018-06-10), pages 3484-3488, XP033456345, DOI: 10.1109/PVSC.2018.8547708**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne les panneaux photovoltaïques bifaciaux et plus particulièrement la caractérisation d'un module photovoltaïque bifacial pour évaluer ses performances et identifier l'origine de la différence de performance entre ses deux faces actives. Le document HO JIAN WEI ET AL: "Evaluating Performance Loss and Predicting Efficiency Gain of Bifacial Silicon Solar Cells",2018 IEEE 7TH WORLD CONFERENCE ON PHOTOVOLTAIC ENERGY CONVERSION (WCPEC) (A JOINT CONFERENCE OF 45TH IEEE PVSC, 28TH PVSEC & 34TH EU PVSEC), IEEE, 10 juin 2018 (2018-06-10), pages 3484-3488, XP033456345,DOI: 10.1109/PVSC.2018.8547708, décrit un procédé pour caractériser un module PV bifacial.

Les modules photovoltaïques bifaciaux recueillent non seulement la lumière du soleil sur le côté faisant face au soleil, mais ils recueillent également la lumière diffuse sur la face arrière qui est réfléchie par la surface sous le panneau solaire et par l'environnement (herbe, sable, terre ou autre). Les modules bifaciaux peuvent générer un rendement de production supplémentaire, allant de 10 à 30%, par rapport aux modules monofaciaux.

Les modules photovoltaïques bifaciaux, par exemple à base de silicium cristallin, acquièrent ainsi un intérêt croissant dans l'industrie photovoltaïque en raison de leur capacité à induire une amélioration significative de la production photovoltaïque à coûts de fabrication égal, par rapport aux modules photovoltaïques monofaciaux à base de silicium cristallin également.

Un paramètre de performance clé de cette technologie est le coefficient dit de « bifacialité » du module photovoltaïque. En particulier, un tel coefficient quantifie la différence de performance entre les deux faces actives du module. Plus précisément, il s'agit d'établir le rapport entre l'énergie photovoltaïque produite par la face arrière du module et celle produite par la face avant du module, sous une même intensité lumineuse incidente. Pratiquement, cette différence, qui peut être de l'ordre de 30%, est intrinsèque à cette technologie pour des raisons dues principalement à une différence de qualité des matériaux photovoltaïques du module entre les deux faces de ce dernier.

La qualité du transport des porteurs de charges électriques au sein des dispositifs photovoltaïques est un paramètre indicateur de performance et de qualité du matériau photovoltaïque. Le matériau peut en effet être caractérisé par sa mobilité des porteurs de charge, leur longueur de diffusion, leur temps de vie, etc.

Globalement, les matériaux à propriétés photovoltaïques ne sont pas encore de conception idéale en termes de qualité de transport de charges. Ceci est en partie dû à l'existence d'une densité non négligeable de défauts au sein du matériau photovoltaïque, qui est le plus souvent cristallin. Ces défauts physico-chimiques, en perturbant l'arrangement cristallin qui forme le matériau photovoltaïque, se comportent comme des pièges électroniques limitant la quantité de courant photo-généré.

Cette densité de défauts contribue donc directement à la dégradation de la mobilité des porteurs de charges, leur longueur de diffusion, ainsi que leur temps de vie. Accéder donc à des cartographies quantitatives de ces propriétés au sein du module photovoltaïque permettrait de quantifier la qualité du matériau et expliquer alors une différence de performance entre les deux faces actives du module photovoltaïque bifacial. Toutefois, il n'existe pas actuellement de technique permettant d'obtenir une telle cartographie.

La présente invention vient améliorer la situation.

Elle propose à cet effet un procédé de caractérisation optique des performances d'un module photovoltaïque bifacial comprenant une première et une deuxième face active comprenant chacune une pluralité d'élément de surface. En particulier, le procédé comporte, pour chaque face active du module:

- Eclairer un élément de surface de coordonnées choisies dans un plan parallèle aux faces actives, en produisant un faisceau de lumière comprenant au moins une longueur d'onde d'excitation, et mesurer un photocourant généré par l'éclairement de cet élément de surface, et

- Déplacer le module en translation selon ledit plan, successivement pour répéter l'éclairement d'une pluralité d'éléments de surface successifs et obtenir les mesures respectives des photocourants ainsi générés,

- Générer une cartographie de photocourant $Carto_{photocourant}(\lambda,x,y)$ de chacune des faces du module photovoltaïque bifacial, pour comparer des performances photovoltaïques entre chaque face.

Ainsi, l'invention permet d'accéder à des cartographies optiques du photocourant généré pour chaque face active du module bifacial, ce qui permet comme on le verra plus loin de déduire de premières informations avantageuses sur les propriétés de transport et la qualité du matériau photovoltaïque des différentes faces.

Dans une forme de réalisation, le procédé comporte en outre les étapes :

- Eclairer chaque élément de surface une pluralité de fois avec un faisceau de lumière comprenant des longueurs d'onde d'excitation respectives, et mesurer un photocourant généré par l'éclairement de cet élément de surface pour chacune desdites longueurs d'onde d'excitation respectives,

- Générer une pluralité de cartographies de photocourant de chacune des faces du module photovoltaïque bifacial, pour chacune desdites longueurs d'onde d'excitation respectives.

Une telle réalisation permet typiquement d'obtenir des cartographies, non seulement résolues spatialement, mais aussi spectralement (plusieurs cartographies respectives pour plusieurs longueurs d'onde d'excitation).

Ainsi, l'invention permet d'accéder à des cartographies optiques résolues spectralement du photocourant généré pour chaque face active du module bifacial, et de là, comme on le verra plus loin, des propriétés de transport électronique des porteurs de charge au sein de ce module photovoltaïque bifacial.

En effet, dans une forme de réalisation, le procédé comporte les étapes :

- Estimer à partir de la mesure d'un capteur un nombre de photons incidents $N_{photons}(\lambda)$ sur chaque élément de surface pendant l'éclairement, et
- Générer une cartographie estimative d'un rendement quantique externe $EQE(\lambda,x,y)$ pour chacune des faces du module photovoltaïque bifacial, selon une relation du type:

$$EQE(\lambda, x, y) = \frac{Carto_{photocourant}(\lambda, x, y)/q}{N_{photons}(\lambda)}$$

où q est la charge élémentaire égale à $1{,}602{.}10^{-19}$ C.

Dans cette réalisation, en établissant plusieurs cartographies pour différentes longueurs d'onde d'excitation, le procédé peut comporter :

- Estimer une somme, sur l'ensemble desdites longueurs d'onde d'excitation respectives, des cartographies de rendement quantique externe $EQE(\lambda,x,y)$ pour chaque face,
- Et déduire de cette somme estimée une cartographie du courant de court-circuit $I_{sc}(x,y)$ de chacune des faces du module photovoltaïque bifacial, selon une relation du type : $I_{sc}(x, y) = q \int b_s(\varepsilon) EQE(x, y, \varepsilon) d\varepsilon$, où $b_s(\varepsilon)$ est le spectre solaire et $\varepsilon$ est l'énergie du photon incident.

Il est alors possible dans cette réalisation d'estimer une cartographie de paramètre comparant les deux faces actives du module et le procédé comporte en outre :

- Générer une cartographie de ratio de performance $R_{perf}(x, y)$ du module bifacial, selon une relation du type

$$R_{perf}(x, y) = \frac{I_{sc}^{arrière}(x, y) - I_{sc}^{avant}(x, y)}{I_{sc}^{arrière}(x, y)} * 100,$$

où $I_{sc}(x,y)^{avant}$ et $I_{sc}(x,y)^{arrière}$ sont les cartographies du courant de court-circuit respectivement des première et deuxième faces du module photovoltaïque bifacial.

Dans une autre réalisation, sans nécessairement avoir plusieurs longueurs longueur d'onde d'excitation, il est possible d'obtenir des données sur d'autres paramètres de performance comme présenté ci-après. Dans une telle réalisation, le module bifacial comportant en chaque face un matériau semi-conducteur à propriétés photovoltaïques, le procédé peut comporter :

- Générer, à partir de chaque cartographie du rendement quantique externe $EQE(\lambda,x,y)$ d'une face du module photovoltaïque bifacial, une cartographie de longueur de diffusion des porteurs de charge dans le matériau photovoltaïque de cette face, donnée par une relation du type :

$$L_n(\lambda, x, y) = \left[ \frac{e^{-\alpha * w}}{\left(1 - \frac{EQE(\lambda, x, y)}{h(1 - R)}\right)} - 1 \right] * \frac{1}{\alpha}$$

Avec :

- $R$ le coefficient de réflexion de cette face du module photovoltaïque,

$$h^{-1} = 1 + \frac{S}{E\mu}$$

- où S est une vitesse de recombinaison surfacique dans le matériau, E est une intensité de champ électrique du module, $\mu$ est une mobilité électronique dans le matériau,
  - $\alpha$ est un coefficient d'absorption du matériau,
  - W est une largeur de zone charge-espace.

Comme on le verra plus loin, à partir de la relation d'Einstein, il est possible en outre de générer, à partir de chaque cartographie de la longueur de diffusion des porteurs de charge d'une face du module photovoltaïque bifacial, une cartographie de durée de vie des porteurs de charge dans le matériau photovoltaïque de cette face.

La présente invention vise aussi un dispositif de caractérisation optique des performances d'un module photovoltaïque bifacial, le dispositif comprenant, pour la mise en œuvre du procédé selon une des revendications précédentes :

- Une source de lumière pour éclairer chaque élément de surface en produisant un faisceau de lumière comprenant au moins une longueur d'onde d'excitation,
- Un circuit de mesure d'un photocourant généré par l'éclairement de cet élément de surface,
- Une plateforme de support du module, mobile pour déplacer le module en translation selon ledit plan parallèle aux faces actives, pour répéter successivement l'éclairement des éléments de surface successifs et obtenir les mesures respectives des photocourants ainsi générés, et
- Un circuit de traitement pour générer, sur la base desdites mesures, une cartographie de photocourant $Carto_{photocourant}(\lambda,x,y)$ de chacune des faces du module photovoltaïque bifacial, pour comparer des performances photovoltaïques entre chaque face.

Dans une forme de réalisation, le circuit de traitement peut être agencé pour piloter le déplacement en translation selon ledit plan de la plateforme de support du module, par pas de distance choisis.

En outre, la plateforme de support du module peut être mobile en outre en rotation autour d'un axe central du module et parallèle à l'un de ses bords, pour effectuer lesdites mesures alternativement sur la première ou la deuxième face active.

Dans une réalisation, la source de lumière est modulable en longueur d'onde et le circuit de traitement est agencé pour faire varier la longueur d'onde d'excitation de la source de lumière, en vue d'éclairer chaque élément de surface une pluralité de fois avec un faisceau de lumière comprenant des longueurs d'onde d'excitation respectives et de mesurer un photocourant généré par l'éclairement de cet élément de surface pour chacune desdites longueurs d'onde d'excitation respectives, le circuit de traitement étant en outre configuré pour générer une pluralité de cartographies de photocourant de chacune des faces du module photovoltaïque bifacial, pour chacune desdites longueurs d'onde d'excitation respectives.

Une telle réalisation permet alors de calculer l'intégrale du rendement quantique externe qui mène à la détermination du courant de court-circuit pour chaque face.

Une réalisation possible d'une telle source de lumière modulable en longueur d'onde peut consister à prévoir une source produisant un éclairement dans une pluralité de longueurs d'onde (par exemple un laser blanc), et le circuit de traitement est alors configuré pour piloter un filtre optique modulable en longueur d'onde, en sortie de cette source de lumière, pour faire varier la longueur d'onde d'excitation de chaque élément de surface.

Ici, on entend pour le filtre qu'il est "modulable en longueur d'onde" une forme de réalisation possible dans laquelle le filtre est un basse-bande étroit laissant passer la lumière avec ce qui est décrit ci-après comme une seule longueur d'onde d'excitation, notée $\lambda$ (en réalité une bande spectrale très étroite).

Comme indiqué précédemment, la source de lumière peut être un laser blanc produisant un éclairement dans une gamme de longueurs d'onde comprise par exemple entre 450nm et 1600nm.

On peut prévoir en outre une optique de focalisation du faisceau issu de la source de lumière sur chacun desdits éléments de surface, ce qui permet d'apporter une cartographie finement résolue spatialement.

Le dispositif peut prévoir en outre un capteur de lumière témoin issue de la source de lumière pour estimer un nombre de photons $N_p(\lambda)$ incidents sur chacun des éléments de surface.

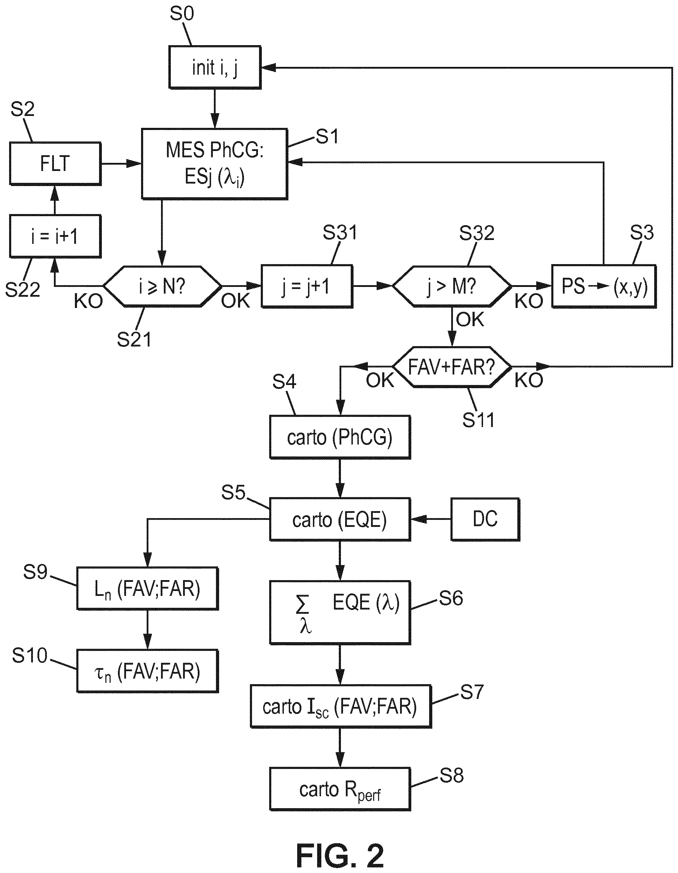

La présente invention vise aussi un programme informatique comportant des instructions pour la mise en œuvre du procédé défini précédemment, lorsque ces instructions sont exécutées par un processeur d'un circuit de traitement. A ce titre, la figure 2 décrite ci-après peut correspondre à l'algorithme général d'un tel programme informatique.

D'autres avantages et caractéristiques de l'invention apparaitront à la lecture des modes de réalisation de l'invention qui sont présentés ci-après, à titre illustratif et aucunement limitatif, et à l'examen des dessins annexés sur lesquels :

- La figure 1 illustre un dispositif pour la mise en œuvre du procédé selon une forme de réalisation de l'invention,
- La figure 2 illustre les principales étapes d'un procédé au sens de l'invention.

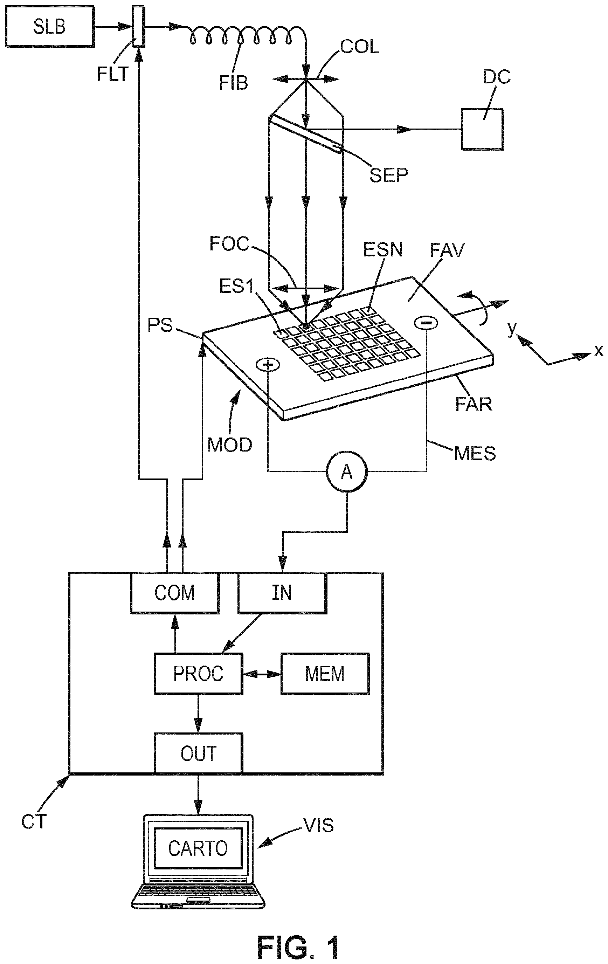

Il est proposé ici, tout d'abord en référence à la figure 1, un dispositif de caractérisation optique permettant d'accéder de façon quantifiée à un ensemble de paramètres indicateurs de la qualité des matériaux photovoltaïques utilisés dans des modules bifaciaux. Ces paramètres sont indicateurs notamment des propriétés de transport électronique au sein du matériau photovoltaïque bifacial, et ce, pour chacune des deux faces actives. Il est alors possible de comparer ces résultats entre les deux faces actives et tirer des conclusions fiables et des pistes d'amélioration concernant l'impact de la qualité du matériau photovoltaïque, en particulier sur le coefficient de bifacialité du module photovoltaïque. Le dispositif de la figure 1 prévoit une source de lumière blanche SLB, un laser par exemple. Typiquement, un laser blanc possède des longueurs d'onde qui s'étendent de 450 nanomètres jusqu'à 1600 nanomètres. Un filtre de longueurs d'ondes FLT commandé informatiquement (par le circuit de traitement CT décrit plus loin) permet de sélectionner la longueur d'onde souhaitée pour l'illumination de la face du module en cours de caractérisation et notée FAV sur le figure 1 (la face opposée étant notée FAR). En variant cette longueur d'onde à la sortie du filtre FLT, on accède optiquement à la dépendance spectrale des propriétés de transport électroniques dont on cherche à établir la cartographie, et ce pour chacune des deux faces actives du module bifacial FAV et FAR ensuite.

Le faisceau lumineux issu du filtre FLT est ensuite couplé à l'intérieur d'une fibre optique FIB pour éviter des fuites du faisceau lumineux vers l'extérieur. A la sortie de la fibre optique, une optique COL collimate le faisceau lumineux et permet d'obtenir un faisceau de rayons parallèles. Une lame séparatrice SEP, placée dans le chemin optique, est adaptée pour la transmission d'une partie du faisceau incident (par exemple 50%) et pour la réflexion d'une partie complémentaire de ce faisceau (par exemple 50% complémentaires). La partie réfléchie du faisceau est dirigée vers un capteur témoin d'intensité lumineuse DC. Ce capteur DC (par exemple une diode de contrôle) est préalablement calibré et, connaissant la longueur d'onde de la lumière ($\lambda$) qu'il reçoit, permet d'exprimer l'intensité lumineuse reçue en un nombre de photons $N_{photons}(\lambda)$.

La partie transmise du faisceau incident est focalisée par une optique de focalisation FOC (par exemple une lentille convergente ou un objectif de microscope) sur un élément de surface de la face FAV du module photovoltaïque bifacial MOD. La taille du point de focalisation ainsi créé dépend de l'ouverture numérique de cet élément, de sa pupille d'entrée, du diamètre du faisceau et de la longueur d'onde du faisceau.

Ce point de focalisation a en définitive les dimensions d'un élément de surface de la face FAV en cours de caractérisation qui correspondra à un point de la cartographie du coefficient de bifacialité. D'ailleurs, le module est fixé sur une plateforme de support PS, mobile en translation (axes x et y) pour appliquer le faisceau ainsi focalisé successivement sur une pluralité d'éléments de surface ES1, ..., ESN de la face FAV. Par ailleurs, cette plateforme PS peut être retournée de 180° (autour d'un axe central du module MOD, parallèle à l'un de ses bords (ici un axe parallèle à l'axe x)) pour caractériser la deuxième face FAR.

En particulier, pendant l'excitation optique, l'élément de surface ESi de coordonnées (xi,yi) sur la face FAV génère un photocourant $Ip_{hoto}(\lambda)$ pour la longueur d'onde ($\lambda$) sélectionnée.

Ce photocourant généré $I_{photo}(\lambda)$ est mesuré aux bornes « + »/ « - » du module par le circuit de mesure MES connecté à l'interface d'entrée IN du circuit de traitement CT.

On peut répéter ces mesures du photocourant pour différentes longueurs d'onde en un même point (ou « élément de surface » ESi comme décrit précédemment) puis, en déplaçant en translation la plateforme PS, balayer et exciter, en chaque point pour différentes longueurs d'onde sélectionnées, la totalité de la face FAV du module photovoltaïque bifacial.

Dans une forme de réalisation, on peut établir une première cartographie complète du photocourant généré par la face FAV du module photovoltaïque bifacial, et ce avec plusieurs longueurs d'onde d'excitation en chaque point, sous un nombre de photons incidents qui est maintenu constant grâce à la diode de contrôle témoin DC. Cette première cartographie de photocourant est notée $Carto_{photocourant}(\lambda,x,y)$. Elle est établie pour une longueur d'onde d'excitation ($\lambda$), mais bien sûr le nombre de cartographies de photocourant $Carto_{photocourant}(\lambda,x,y)$ égale un nombre de longueurs d'onde d'excitation choisies dans la gamme précitée de 450 nanomètres jusqu'à 1600 nanomètres du laser blanc.

Le circuit de traitement de traitement précité CT comporte quant à lui :

- Une interface de commande COM pour faire évoluer la longueur d'onde d'excitation en pilotant le filtre FLT, puis pour piloter la plateforme de support PS du module pour commander une translation dans le plan (x,y) et passer d'un élément de surface ESi au suivant ESi+1 (cette interface de commande COM peut être séparée en deux interfaces de commande, l'une pour le filtre FLT et l'autre pour la plateforme PS),
- Une mémoire MEM pour stocker (temporairement ou non) des données de mesure et des données de cartographies et surtout pour stocker durablement des instructions d'un programme informatique au sens de l'invention pour opérer les étapes du procédé décrit plus loin en référence à la figure 2,
- L'interface d'entrée précitée IN pour recevoir les données de mesure du circuit de mesure MES,

- Un processeur PROC connecté à la mémoire MEM et aux interfaces COM et IN pour recevoir les données de mesure, les traiter par l'exécution du programme informatique selon l'invention, stocker les données traitées, et commander l'interface COM pour passer à une longueur d'onde suivante et/ou à un élément de surface suivant,
- Une interface de sortie OUT pour visualiser une cartographie de performance du module bifacial (ou encore du coefficient de bifacialité par exemple), du type décrit plus loin, sur un écran VIS ou équivalent.

Le circuit de traitement CT ou un opérateur peut piloter, une fois l'ensemble des mesures effectuées sur la première face FAV, le retournement de la plateforme de support PS de 180° pour élaborer ces mesures à nouveau sur l'autre face FAR du module bifacial. Cette deuxième face active FAR est alors horizontalement exposée au faisceau d'excitation lumineuse rigoureusement dans les mêmes conditions que la première face FAV, contrôlées par un nombre de photons constant indiqué par le capteur (la diode de contrôle) DC. A cet effet, une réalisation, non illustrée sur la figure 1 pour conserver sa clarté, consiste à asservir la source SLB au circuit de traitement CT qui reçoit le signal du capteur DC pour produire un nombre de photons constant sur chaque élément de surface ESi, et ce sur les deux faces actives du module.

En référence maintenant à la figure 2, après une étape d'initialisation de paramètres S0 (i=1 ; j=1), le circuit de traitement obtient la mesure du photocourant généré à l'étape S1, pour :

- l'ensemble des longueurs d'onde $\lambda$i (i allant de 1 à N aux étapes S21 et S22) en pilotant le filtre FLT à l'étape S2 ;

- l'ensemble des éléments de surface ESj d'une face (j allant de 1 à M aux étapes S31 et S32) en pilotant le déplacement en translation de la plateforme de support PS du module bifacial à l'étape S3 ;

- Et pour l'ensemble des deux faces FAV et FAR (à l'étape S11) en pilotant la rotation de 180° de la plateforme PS.

Une fois les données de ces mesures obtenues, le procédé se poursuit par leur traitement comme suit. On établit à l'étape S4 l'ensemble des cartographies de photocourant généré, pour différentes longueurs d'onde $Carto_{photocourant}(\lambda,x,y)$ et les différents éléments de surface pour les deux faces. A l'étape S5, on en déduit des cartographies du rendement quantique externe $EQE(\lambda,x,y)$ de chaque face du module photovoltaïque bifacial en calculant

$$EQE(\lambda, x, y) = \frac{Carto_{photocourant}(\lambda, x, y)/q}{N_{photons}(\lambda)} \; ;$$

le rapport suivant :
q étant la charge élémentaire : $1,602.10^{-19}$ C.

Il s'agit alors de calculer le ratio entre le nombre de porteurs de charges photogénéré et le nombre de photons incidents $N_{photons}$, pour chaque longueur d'excitation et chaque élément de surface de position (x,y) d'une face du module photovoltaïque bifacial.

Le nombre de photons incidents est quant à lui donné par le capteur (diode témoin de contrôle DC).

A l'étape S6, on peut ensuite calculer une somme de l'ensemble des cartographies $EQE(\lambda,x,y)$ obtenues pour chaque élément de surface sur l'ensemble des longueurs d'onde d'excitation, comme une intégrale sur le spectre optique considéré. Cette somme est calculée pour chaque face active du module photovoltaïque et chaque élément de surface.

On peut obtenir ainsi à l'étape S7 un paramètre qui permet de quantifier le transport électronique au sein de chaque face active du module. Il s'agit du courant de court-circuit $I_{sc}(x,y)$ qui se calcule effectivement comme suit : $I_{sc}(x,y) = q\int b_S(\varepsilon)EQE(x,y,\varepsilon)d\varepsilon$ ; où $b_S(\varepsilon)$ est le spectre solaire (mesuré par exemple à A.M.1.5, ou localement à l'aide d'un spectromètre), $\varepsilon$ est l'énergie du photon incident calculée directement à partir de sa longueur d'onde $\lambda$ (avec $\varepsilon = h * c / \lambda$, où la constante de Planck $h=6,63*10^{-34}$ J.s et $c= 300\ 000$ m.s$^{-1}$).

On obtient ainsi à l'étape S7 deux cartographies de la valeur absolue du courant de court-circuit respectivement pour les deux faces actives du module photovoltaïque bifacial : $I_{sc}^{avant}(x,y)$ et $I_{sc}^{arrière}(x,y)$, exprimées en ampères (A).

A l'étape S8, grâce aux deux cartographies $I_{sc}^{avant}(x,y)$ et $I_{sc}^{arrière}(x,y)$, il est possible d'établir une cartographie de ratio de performance $R_{perf}(x,y)$ entre la face arrière et la face avant du module photovoltaïque bifacial, comme suit :

$$R_{perf}(x,y) = \frac{I_{sc}^{arrière}(x,y) - I_{sc}^{avant}(x,y)}{I_{sc}^{arrière}(x,y)} * 100$$

Cette cartographie permet de quantifier et de caractériser spatialement la différence de performance et par conséquent la différence de la qualité du matériau photovoltaïque, entre la face avant et la face arrière du module photovoltaïque bifacial.

Toutefois, ce paramètre et sa répartition spatiale n'est pas le seul qui puisse être obtenu par la mise en œuvre du procédé par le dispositif selon l'invention.

Dans une forme de réalisation, pour une analyse plus fine du ratio de performance $R_{perf}(x,y)$, les cartographies pour différentes longueurs d'onde $EQE(\lambda)$ sont utilisées pour accéder à d'autres propriétés de transport électroniques (par exemple pour mieux comprendre la différence de qualité et de performance du matériau photovoltaïque entre les deux faces actives).

Le modèle de Gartner, exposé notamment dans :
W. Gärtner, « Depletion-layer photoeffects in semiconductors », Phys. Rev. 116 (1) (1959) 84,
est utilisé comme suit :

$$EQE(\varepsilon) = h\left(1 - \frac{e^{-\alpha*w}}{1+\alpha L_n}\right)(1-R)$$

avec

- $R$ le coefficient de réflexion, de l'ordre de 10% pour les modules photovoltaïques actuels,

- $h^{-1} = 1 + \frac{S}{E\mu}$ avec S la vitesse de recombinaison surfacique de l'ordre de $10^2$ cm/s, E l'intensité du champ électrique de l'ordre de $10^4$ V/cm, $\mu$ la mobilité électronique de l'ordre de $1.2 \times 10^3$ cm$^2$/V/s

- $\alpha$ le coefficient d'absorption considéré variable en fonction de la longueur d'excitation, et dont la valeur logarithmique varie entre $10^{-7}$ cm$^{-1}$ et $10^5$ cm$^{-1}$ sur des gammes spectrales larges,

- W la largeur de la zone charge-espace qui est typiquement 1 $\mu$m environ.

La seule variable de ce modèle est la longueur de diffusion des porteurs de charges $L_n$ qui est une propriété de transport que donne ainsi le modèle de Gärtner :

$$L_n = \left[\frac{e^{-\alpha*w}}{\left(1 - \frac{EQE(\varepsilon)}{h(1-R)}\right)} - 1\right] * \frac{1}{\alpha}$$

En appliquant à l'étape S9 le modèle de Gärtner et en se basant sur les cartographies $EQE(\lambda,x,y)$ déjà calculées, on génère pour chaque face active du module, une cartographie de la longueur de diffusion des porteurs de charge :

$L_n^{avant}(x,y)$ et $L_n^{arrière}(x,y)$

Ces cartographies sont générées pour une longueur d'onde d'excitation donnée qui peut être choisie par exemple pour sonder une région (typiquement une épaisseur) du matériau, qui est souhaitée afin d'observer des caractéristiques et phénomènes physiques particuliers dans cette région.

Dans une forme de réalisation en outre, en se basant sur la relation d'Einstein, on calcule une autre propriété de transport électronique correspondant au temps de vie des porteurs minoritaires de charge $\tau_n$.

$$D_n = \frac{\mu_n kT}{q},$$

En effet, selon la relation d'Einstein : avec :

- k=1,38*10$^{-23}$ J.K$^{-1}$ la constante de Boltzmann,

- $\mu_n$ la mobilité électronique qui peut être typiquement de l'ordre de $1{,}2.10^3$ cm$^2$/V/s,

- T la température, et

- q la charge élémentaire,

on peut calculer le coefficient de diffusion $D_n$ des porteurs de charge (cm$^2$.s$^{-1}$) au sein du module photovoltaïque bifacial.

Comme en outre la durée de vie des porteurs $\tau_n$ est reliée à la longueur de diffusion $L_n$ et à ce coefficient de diffusion $D_n$ par une équation du type $L_n = \sqrt{D_n \tau_n}$ , on peut ainsi générer à l'étape S10 pour chacune des deux faces actives du module photovoltaïque bifacial une cartographie de la durée de vie des porteurs de charge :

$$\tau_n^{avant}(x, y) = \frac{L_n^{avant}(x, y)^2}{D_n} \quad \text{et} \quad \tau_n^{arrière}(x, y) = \frac{L_n^{arrière}(x, y)^2}{D_n}$$

Ainsi, l'invention permet la caractérisation des modules photovoltaïques bifaciaux, par :

- un éclairement focalisé sur l'une des deux faces actives d'un module,
- la mesure d'un photocourant ainsi généré aux bornes du modules, et
- l'établissement d'une cartographie du photocourant pour chaque face active en déplaçant par pas successifs le module par rapport à la source de lumière.

Par ailleurs, il est possible aussi de faire varier la longueur d'onde de l'éclairement (monochromatique) afin d'obtenir cette cartographie pour différentes longueurs d'onde d'excitation. Dans un mode de réalisation, on peut alors calculer une somme sur l'ensemble des longueurs d'onde d'excitation appliquée au rendement quantique externe qui dépend du photocourant généré, et, de là, obtenir alors une cartographie du courant de court-circuit du module, pour chaque face active. On peut obtenir en outre un coefficient de performance $R_{perf}$ qui se calcule à partir des courants de court-circuit de chaque face du module.

Dans un mode de réalisation, on peut en outre utiliser le modèle de Gärtner pour calculer les cartographies des longueurs de diffusion et durées de vie des porteurs dans le matériau photovoltaïque de chaque face active, qui se déduisent des cartographies de rendement quantique externe.

Bien entendu, le croisement entre les analyses des différentes cartographies de performance et de propriétés de transport obtenues permet de déterminer quantitativement les caractéristiques spatiales d'une différence de qualité de matériau entre les faces avant et arrière et d'une zone du module à l'autre.

L'invention propose ainsi un outil de caractérisation optique possiblement à l'échelle industrielle sur des lignes de productions de dispositifs photovoltaïques permettant ainsi de quantifier la qualité de fabrication des modules bifaciaux et éventuellement d'optimiser les procédures de fabrication.

## Revendications

**1.** Procédé de caractérisation optique des performances d'un module photovoltaïque bifacial comprenant une première et une deuxième face active comprenant chacune une pluralité d'élément de surface (ES1, ..., ESN), le procédé comprenant pour chaque face active du module:

   - Eclairer un élément de surface de coordonnées choisies (x, y) dans un plan parallèle aux faces actives, en produisant un faisceau de lumière comprenant au moins une longueur d'onde d'excitation, et mesurer un photocourant généré par l'éclairement de cet élément de surface, et
   - Déplacer le module en translation selon ledit plan, successivement pour répéter l'éclairement d'une pluralité d'éléments de surface successifs et obtenir les mesures respectives des photocourants ainsi générés,
   - Générer une cartographie de photocourant $Carto_{photocourant}(\lambda, x, y)$ de chacune des faces du module photovoltaïque bifacial, pour comparer des performances photovoltaïques entre chaque face.

**2.** Procédé selon la revendication 1, comportant :

- Eclairer chaque élément de surface une pluralité de fois avec un faisceau de lumière comprenant des longueurs d'onde d'excitation respectives, et mesurer (S1) un photocourant généré par l'éclairement de cet élément de surface pour chacune desdites longueurs d'onde d'excitation respectives,
- Générer (S4) une pluralité de cartographies de photocourant de chacune des faces du module photovoltaïque bifacial, pour chacune desdites longueurs d'onde d'excitation respectives.

3. Procédé selon l'une des revendications précédentes, comportant :

- Estimer à partir de la mesure d'un capteur (DC) un nombre de photons incidents $N_{photons}(\lambda)$ sur chaque élément de surface pendant l'éclairement, et
- Générer (S5) une cartographie estimative d'un rendement quantique externe $EQE(\lambda,x,y)$ pour chacune des faces du module photovoltaïque bifacial, selon une relation du type:

$$EQE(\lambda, x, y) = \frac{Carto_{photocourant}(\lambda, x, y)/q}{N_{photons}(\lambda)}$$

où q est la charge élémentaire égale à $1,602.10^{-19}$ C.

4. Procédé selon la revendication 3, prise en combinaison avec la revendication 2, comportant :

- Estimer (S6) une somme, sur l'ensemble desdites longueurs d'onde d'excitation respectives, des cartographies de rendement quantique externe $EQE(\lambda,x,y)$ pour chaque face,
- Et déduire (S7) de ladite somme estimée une cartographie du courant de court-circuit $I_{sc}(x,y)$ de chacune des faces du module photovoltaïque bifacial, selon une relation du type : $I_{sc}(x,y) = q\int b_S(\varepsilon)EQE(x,y,c)d\varepsilon$, où $b_s(\varepsilon)$ est le spectre solaire et $\varepsilon$ est l'énergie du photon incident.

5. Procédé selon la revendication 4, comportant en outre :

- Générer (S8) une cartographie de ratio de performance $R_{perf}(x,y)$ du module bifacial, selon une relation du

type $$R_{perf}(x, y) = \frac{I_{sc}^{arrière}(x, y) - I_{sc}^{avant}(x, y)}{I_{sc}^{arrière}(x, y)} * 100,$$ où $I_{sc}(x,y)^{avant}$ et $I_{sc}(x,y)^{arrière}$ sont les cartographies du courant de court-circuit respectivement des première et deuxième faces du module photovoltaïque bifacial.

6. Procédé selon la revendication 3, le module bifacial comportant en chaque face un matériau semi-conducteur à propriétés photovoltaïques, comportant :

- Générer (S9), à partir de chaque cartographie du rendement quantique externe $EQE(\lambda,x,y)$ d'une face du module photovoltaïque bifacial, une cartographie de longueur de diffusion des porteurs de charge dans le matériau photovoltaïque de cette face, donnée par une relation du type :

$$L_n(\lambda, x, y) = \left[\frac{e^{-\alpha * w}}{\left(1 - \frac{EQE(\lambda, x, y)}{h(1 - R)}\right)} - 1\right] * \frac{1}{\alpha}$$

Avec :

- $R$ le coefficient de réflexion de cette face du module photovoltaïque,
- $h^{-1} = 1 + \frac{S}{E\mu}$ où S est une vitesse de recombinaison surfacique dans le matériau, E est une intensité de champ électrique du module, $\mu$ est une mobilité électronique dans le matériau,
- $\alpha$ est un coefficient d'absorption du matériau,

• W est une largeur de zone charge-espace.

7. Procédé selon la revendication 6, comportant :

- Générer (S10), à partir de chaque cartographie de la longueur de diffusion des porteurs de charge d'une face du module photovoltaïque bifacial, une cartographie de durée de vie des porteurs de charge dans le matériau photovoltaïque de cette face.

8. Dispositif de caractérisation optique des performances d'un module photovoltaïque bifacial, le dispositif comprenant, pour la mise en œuvre du procédé selon une des revendications précédentes :

- Une source de lumière pour éclairer chaque élément de surface en produisant un faisceau de lumière comprenant au moins une longueur d'onde d'excitation,
- Un circuit de mesure (MES) d'un photocourant généré par l'éclairement de cet élément de surface,
- Une plateforme de support (PS) du module, mobile pour déplacer le module en translation selon ledit plan parallèle aux faces actives, pour répéter successivement l'éclairement des éléments de surface successifs et obtenir les mesures respectives des photocourants ainsi générés, et
- Un circuit de traitement pour générer, sur la base desdites mesures, une cartographie de photocourant $Carto_{pholocourant}(\lambda,x,y)$ de chacune des faces du module photovoltaïque bifacial, pour comparer des performances photovoltaïques entre chaque face.

9. Dispositif selon la revendication 8, dans lequel le circuit de traitement (CT) est agencé pour piloter le déplacement en translation selon ledit plan de la plateforme de support (PS) du module, par pas de distance choisis.

10. Dispositif selon l'une des revendications 8 et 9, dans lequel la plateforme de support (PS) du module est mobile en outre en rotation autour d'un axe central du module et parallèle à l'un de ses bords, pour effectuer lesdites mesures alternativement sur la première ou la deuxième face active.

11. Dispositif selon l'une des revendications 8 à 10, dans lequel la source de lumière est modulable en longueur d'onde et le circuit de traitement est agencé pour faire varier la longueur d'onde d'excitation de la source de lumière, en vue d'éclairer chaque élément de surface une pluralité de fois avec un faisceau de lumière comprenant des longueurs d'onde d'excitation respectives et de mesurer (S1) un photocourant généré par l'éclairement de cet élément de surface pour chacune desdites longueurs d'onde d'excitation respectives, le circuit de traitement étant en outre configuré pour générer (S4) une pluralité de cartographies de photocourant de chacune des faces du module photovoltaïque bifacial, pour chacune desdites longueurs d'onde d'excitation respectives.

12. Dispositif selon la revendication 11, dans lequel, la source de lumière produisant un éclairement dans une pluralité de longueurs d'onde, le circuit de traitement (CT) est configuré pour piloter un filtre optique modulable en longueur d'onde, en sortie de la source de lumière, pour faire varier ladite longueur d'onde d'excitation de chaque élément de surface.

13. Dispositif selon la revendication 12, dans lequel la source de lumière est un laser blanc produisant un éclairement dans une gamme de longueurs d'onde comprise entre 450nm et 1600nm.

14. Dispositif selon l'une des revendications 8 à 13, comportant une optique de focalisation du faisceau issu de la source de lumière sur chacun desdits éléments de surface.

15. Dispositif selon l'une des revendications 8 à 14, comportant en outre un capteur de lumière témoin (DC) issue de la source de lumière pour estimer un nombre de photons $N_{pho}(\lambda)$ incidents sur chacun des éléments de surface.

16. Programme informatique comportant des instructions pour la mise en œuvre du procédé selon l'une des revendications 1 à 7, lorsque lesdites instructions sont exécutées par un processeur (PROC) d'un circuit de traitement (CT).

**Patentansprüche**

1. Verfahren zur optischen Charakterisierung der Leistungen eines bifazialen Fotovoltaikmoduls mit einer ersten und einer zweiten aktiven Seite, die jeweils mehrere Oberflächenelemente (ES1, ..., ESN) umfassen, wobei das Verfahren für jede aktive Seite des Moduls umfasst:

- Beleuchten eines Oberflächenelements mit ausgewählten Koordinaten (x, y) in einer Ebene parallel zu den aktiven Seiten, indem ein Lichtstrahl mit mindestens einer Anregungswellenlänge erzeugt wird, und Messen eines Fotostroms, der durch die Beleuchtung dieses Oberflächenelements erzeugt wird, und
- fortschreitendes Bewegen des Moduls in Translation entlang dieser Ebene, um die Beleuchtung mehrerer aufeinanderfolgender Oberflächenelemente zu wiederholen und die jeweiligen Messungen der so erzeugten Fotoströme zu erhalten,
- Erstellen einer Fotostrom-Karte $Carto_{photocurrant}(\lambda,x,y)$ jeder Seite des bifazialen Fotovoltaikmoduls, um die Fotovoltaikleistungen zwischen jeder Seite zu vergleichen.

2. Verfahren nach Anspruch 1, umfassend:

- mehrfaches Beleuchten jedes Oberflächenelements mit einem Lichtstrahl, der jeweilige Anregungswellenlängen umfasst, und Messen (S1) eines Fotostroms, der durch die Beleuchtung dieses Oberflächenelements für jede der jeweiligen Anregungswellenlängen erzeugt wird,
- Erzeugen (S4) einer Vielzahl von Fotostrom-Karten von jeder der Seiten des bifazialen Fotovoltaikmoduls für jede der jeweiligen Anregungswellenlängen.

3. Verfahren nach einem der vorhergehenden Ansprüche, umfassend:

- Abschätzen einer Anzahl auf jedes Oberflächenelement während der Beleuchtung einfallender Photonen $N_{photons}(\lambda)$ ausgehend von der Messung eines Sensors (DC), und
- Generieren (S5) einer abgeschätzten Karte einer externen Quantenausbeute $EQE(A, x, y)$ für jede der Seiten des bifazialen Fotovoltaikmoduls gemäß einer Beziehung des Typs:

$$EQE(\lambda, x, y) = \frac{Carto_{photocourant}(\lambda, x, y) / q}{N_{photons}(\lambda)}$$

wobei $q$ die Elementarladung ist, die gleich $1{,}602.10^{-19}$ C ist.

4. Verfahren nach Anspruch 3 in Kombination mit Anspruch 2, umfassend:

- Abschätzen (S6) einer Summe der Karten der externen Quantenausbeute $EQE(A, x, y)$ über die Gesamtheit der jeweiligen Anregungswellenlängen für jede Seite,
- und Ableiten (S7) einer Karte des Kurzschlussstroms $I_{sc}(x, y)$ jeder der Seiten des bifazialen Fotovoltaikmoduls aus dieser abgeschätzten Summe gemäß einer Beziehung des Typs:

$$I_{sc}(x, y) = q \int b_S(\varepsilon) EQE(x, y, \varepsilon) d\varepsilon ,$$

wobei $b_S(\varepsilon)$ das Sonnenspektrum und $\varepsilon$ die Energie des einfallenden Photons ist.

5. Verfahren nach Anspruch 4, ferner umfassend:

- Erzeugen (S8) einer Leistungsverhältnis-Karte $R_{perf}(x, y)$ des bifazialen Moduls gemäß einer Beziehung vom Typ

$$R_{perf}(x, y) = \frac{I_{sc}^{arrière}(x, y) - I_{sc}^{avant}(x, y)}{I_{sc}^{arrière}(x, y)} * 100 ,$$

wobei $I_{sc}(x, y)^{avant}$ und $I_{sc}(x, y)^{arrière}$ die Kurzschlussstrom-Karten der ersten bzw. zweiten Seite des bifazialen Fotovoltaikmoduls sind.

6. Verfahren nach Anspruch 3, wobei das bifaziale Modul auf jeder Seite ein Halbleitermaterial mit fotovoltaischen Eigenschaften umfasst, umfassend:

   - Erzeugen (S9), ausgehend von jeder externen-Quanteneffizienz-Karte *EQE(A, x, y)* einer Seite des bifazialen Fotovoltaikmoduls, einer Karte der Diffusionslänge der Ladungsträger im Fotovoltaikmaterial dieser Seite, gegeben durch eine Beziehung vom Typ:

$$L_n(\lambda, x, y) = \left[ \frac{e^{-\alpha * w}}{\left( 1 - \dfrac{EQE(\lambda, x, y)}{h(1 - R)} \right)} - 1 \right] * \frac{1}{\alpha}$$

   wobei

   • $R$ der Reflexionskoeffizient dieser Seite des Fotovoltaikmoduls ist,
   • $h^{-1} = 1 + S/(E\mu)$, wobei $S$ eine Oberflächenrekombinationsrate im Material ist, E eine elektrische Feldstärke des Moduls ist, $\mu$ eine elektronische Mobilität im Material ist,
   • $\alpha$ ein Absorptionskoeffizient des Materials ist,
   • $W$ eine Raumladungszonenbreite ist.

7. Verfahren nach Anspruch 6, umfassend:

   - Generieren (S10), ausgehend von jeder Karte der Diffusionslänge der Ladungsträger einer Seite des bifazialen Fotovoltaikmoduls, einer Karte der Lebensdauer der Ladungsträger im Fotovoltaikmaterial dieser Seite.

8. Vorrichtung zur optischen Charakterisierung der Leistungen eines bifazialen Fotovoltaikmoduls, wobei die Vorrichtung zum Durchführen des Verfahrens gemäß einem der vorhergehenden Ansprüche umfasst:

   - eine Lichtquelle zum Beleuchten jedes Oberflächenelements durch Erzeugen eines Lichtstrahls mit mindestens einer Anregungswellenlänge,
   - eine Mess-Schaltung (MES) für einen Fotostrom, der durch die Beleuchtung dieses Oberflächenelements erzeugt wird,
   - eine Stützplattform (PS) des Moduls, die beweglich ist, um das Modul in Translation entlang der Ebene parallel zu den aktiven Seiten zu bewegen, um die Beleuchtung aufeinanderfolgender Oberflächenelemente nacheinander zu wiederholen und die jeweiligen Messungen der so erzeugten Fotoströme zu erhalten, und
   - eine Verarbeitungsschaltung zum Erzeugen einer Fotostrom-Karte *Carto_{photocurrant}(λ, x, y)* jeder Seite des bifazialen Fotovoltaikmoduls auf der Basis dieser Messungen, um die Fotovoltaikleistung zwischen jeder Seite zu vergleichen.

9. Vorrichtung nach Anspruch 8, wobei die Verarbeitungsschaltung (CT) angeordnet ist, um die Translationsbewegung entlang der Ebene der Stützplattform (PS) des Moduls durch ausgewählte Abstandsschritte zu steuern.

10. Vorrichtung nach einem der Ansprüche 8 und 9, wobei die Stützplattform (PS) des Moduls weiter in Drehung um eine Mittelachse des Moduls und parallel zu einer seiner Kanten beweglich ist, um die Messungen abwechselnd an der ersten oder der zweiten aktiven Seite durchzuführen.

11. Vorrichtung nach einem der Ansprüche 8 bis 10, wobei die Lichtquelle in der Wellenlänge modulierbar ist, und die Verarbeitungsschaltung angeordnet ist, um die Anregungswellenlänge der Lichtquelle zu variieren, um jedes Oberflächenelement mehrere Male mit einem Lichtstrahl zu beleuchten, der entsprechende Anregungswellenlängen umfasst, und um einen Fotostrom zu messen (S1), der durch die Beleuchtung dieses Oberflächenelements für jede der jeweiligen Anregungswellenlängen erzeugt wird, wobei die Verarbeitungsschaltung ferner konfiguriert ist, um eine Vielzahl von Fotostrom-Karten von jeder der Seiten des bifazialen Fotovoltaikmoduls für jede der jeweiligen Anregungswellenlängen zu erzeugen (S4).

12. Vorrichtung nach Anspruch 11, wobei die Lichtquelle eine Beleuchtung in mehreren Wellenlängen erzeugt, und die Verarbeitungsschaltung (CT) konfiguriert ist, um ein optisches Filter, das in der Wellenlänge modulierbar ist, am Ausgang der Lichtquelle anzusteuern, um die Anregungswellenlänge jedes Oberflächenelements zu variieren.

13. Vorrichtung nach Anspruch 12, wobei die Lichtquelle ein weißer Laser ist, der eine Beleuchtung in einem Wellenlängenbereich zwischen 450 nm und 1600 nm erzeugt.

14. Vorrichtung nach einem der Ansprüche 8 bis 13, umfassend eine Optik zum Fokussieren des Strahls von der Lichtquelle auf jedes der Oberflächenelemente.

15. Vorrichtung nach einem der Ansprüche 8 bis 14, ferner umfassend einen Sensor für Kontrolllicht (DC), das von der Lichtquelle ausgeht, zum Abschätzen einer Anzahl von Photonen $N_{photons}(\lambda)$, die auf jedes der Oberflächenelemente einfallen.

16. Computerprogramm, umfassend Anweisungen zum Implementieren des Verfahrens gemäß einem der Ansprüche 1 bis 7, wenn diese Anweisungen von einem Prozessor (PROC) einer Verarbeitungsschaltung (CT) ausgeführt werden.

**Claims**

1. Method for the optical characterisation of performances of a bifacial photovoltaic module comprising a first and a second active face, each comprising a plurality of surface elements (ES1, ..., ESN), the method comprising for each active face of the module:

  - illuminating a surface element with selected coordinates (x, y) in a plane parallel to the active faces, by producing a beam of light comprising at least one excitation wavelength, and measuring a photocurrent generated by the illumination of this surface element, and
  - displacing the module in translation along said plane, successively to repeat the illumination of a plurality of successive surface elements and obtain the respective measurements of photocurrents generated in this way,
  - generating a photocurrent map $Carto_{photocurrent}(\lambda, x, y)$ of each face of the bifacial photovoltaic module, for comparing the photovoltaic performances between each face.

2. Method according to claim 1, including:

  - illuminating each surface element a plurality of times with a beam of light comprising respective excitation wavelengths, and measuring (S 1) a photocurrent generated by the illumination of this surface element for each of said respective excitation wavelengths,
  - generating (S4) a plurality of photocurrent maps of each face of the bifacial photovoltaic module, for each of said respective excitation wavelengths.

3. Method according to any of the preceding claims, including:

  - estimating from a sensor measurement (DC) a number of incident photons $N_{photons}(\lambda)$ on each surface element during the illumination, and
  - generating (S5) an estimated map of an external quantum efficiency $EQE (\lambda, x, y)$ for each face of the bifacial photovoltaic module, according to a relationship of the type:

$$EQE(\lambda \; x \; y) = \frac{Cartophotocurrent \; (\lambda \; x \; y) \; / \; q}{Nphotons \; (\lambda}$$

where q is the elementary charge equal to $1.602.10^{-19}$ C.

4. Method according to claim 3, in combination with claim 2, including:

  - estimating (S6) a sum, for all of said respective excitation wavelengths, of the external quantum efficiency maps $EQE (\lambda, x, y)$ for each face,
  - and deriving (S7) from said estimated sum a map of the short-circuit current $I_{sc} (x, y)$ of each of the faces of the bifacial photovoltaic module, according to a relationship of the type: $I_{sc}\ (x,y) = q \int b_S\ (\varepsilon)\ EQE\ (x,\ y,\ \varepsilon)\ d\varepsilon,$ where $b_S(\varepsilon)$ is the solar spectrum and $\varepsilon$ is the incident photon energy.

**5.** Method according to claim 4, further including:

- generating (S8) a performative ratio map $R_{perf}(x,\ y)$ of the bifacial module, according to a relationship of the type

$$R_{perf}(x,y) = \frac{I_{sc}^{back}\ (x,y) - I_{sc}^{front}\ (x,y)}{I_{sc}^{back}\ (x,y)} * 100$$

where $I_{sc}\ (x,\ y)^{front}$ and $I_{sc}\ (x,\ y)^{back}$ are short-circuit current maps of the first and second faces of the bifacial photovoltaic module respectively.

**6.** Method according to claim 3, the bifacial module including in each face a semiconductor material with photovoltaic properties, including:

- generating (S9), from each map of the external quantum efficiency $EQE\ (\lambda,\ x,\ y)$ of a face of the bifacial photovoltaic module, a map of the diffusion length of the charge carriers in the photovoltaic material of this face, given by a relationship of the type:

$$L_n(\lambda,x,y) = \left[ \frac{e^{-\alpha * w}}{\left( 1 - \frac{EQE(\lambda,x,y)}{h(1-R)} \right)} - 1 \right] * \frac{1}{\alpha}$$

with:

• $R$ the reflection coefficient of this face of the photovoltaic module,

• $h^{-1} = 1 + \frac{S}{E\mu}$ where S is a surface recombination rate in the material, E is an electric field strength of the module, $\mu$ is an electronic mobility in the material,

• $\alpha$ is an absorption coefficient of the material,

• W is a charge-space zone width.

**7.** Method according to claim 6, including:

- generating (S10), from each map of the diffusion length of the charge carriers of a face of the bifacial photovoltaic module, a lifetime map of charge carriers in the photovoltaic material of this face.

**8.** Device for optically characterising the performances of a bifacial photovoltaic module, the device comprising, for implementing the method according to any of the preceding claims:

- a light source for illuminating each surface element by producing a beam of light comprising at least one excitation wavelength,
- a circuit for measuring (MES) a photocurrent generated by the illumination of this surface element,
- a support platform (PS) of the module, movable to displace the module in translation in said plane parallel to the active faces, to successively repeat the illumination of successive surface elements and obtain the respective measurements of the photocurrents generated in this way, and
- a processing circuit for generating, on the basis of said measurements, a photocurrent map $Carto_{photocurrent}$ $(\lambda,\ x,\ y)$ of each of the faces of the bifacial photovoltaic module, for comparing photovoltaic performances between each face.

**9.** Device according to claim 8, wherein the processing circuit (CT) is arranged to control the displacement in translation along said plane of the support platform (PS) of the module, by selected distance steps.

**10.** Device according to any of claims 8 and 9, wherein the support platform (PS) of the module can also be moved in rotation about a central axis of the module and parallel to one of its edges, to perform said measurements alternatively on the first or the second active face.

**11.** Device according to any of claims 8 to 10, wherein the light source can be modulated in wavelength and the processing circuit is set up to vary the excitation wavelength of the light source, to illuminate each surface element a plurality of times with a beam of light comprising respective excitation wavelengths and to measure (S1) a photocurrent generated by the illumination of this surface element for each of said respective excitation wavelengths, the processing circuit being further configured to generate (S4) a plurality of photocurrent maps of each of the faces of the bifacial photovoltaic module, for each of said respective excitation wavelengths.

**12.** Device according to claim 11, wherein the light source producing illumination in a plurality of wavelengths, the processing circuit (CT) is configured to control an optical filter which can be modulated in wavelength, at the output of the light source, to vary said excitation wavelength of each surface element.

**13.** Device according to claim 12, wherein the light source is a white laser producing an illumination in a wavelength range between 450 nm and 1600 nm.

**14.** Device according to any of claims 8 to 13, including optics for focusing the beam coming from the light source onto each of said surface elements.

**15.** Device according to any of claims 8 to 14, further including a sensor of control light (DC) coming from the light source for estimating a number of photons $N_{pho} (\lambda)$ incident on each of the surface elements.

**16.** Computer program including instructions for implementing the method according to any of claims 1 to 7, when said instructions are executed by a processor (PROC) of a processing circuit (CT).

**FIG. 1**

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Evaluating Performance Loss and Predicting Efficiency Gain of Bifacial Silicon Solar Cells. **HO JIAN WEI et al.** 2018 IEEE 7TH WORLD CONFERENCE ON PHOTOVOLTAIC ENERGY CONVERSION (WCPEC) (A JOINT CONFERENCE OF 45TH IEEE PVSC, 28TH PVSEC & 34TH EU PVSEC). IEEE, 10 Juin 2018, 3484-3488

- **W. GÄRTNER.** Depletion-layer photoeffects in semiconductors. *Phys. Rev.,* 1959, vol. 116 (1), 84